# EUROPEAN PATENT APPLICATION

(11) **EP 3 855 108 A1**
(43) Date of publication of application: **28.07.2021**
(21) Application number: 20461506.6
(22) Date of filing: 23.01.2020
(51) Int. Cl.: F28F 9/02, F28D 9/00, F16L 41/00, F16L 41/08

(54) **A PLATE AND SPIGOT CONNECTION SYSTEM**

(71) Applicant: Valeo Autosystemy SP. Z.O.O., 32-050 Skawina (PL)
(72) Inventor: SKORUS, Edyta, 32 050 SKAWINA (PL); MIELNICZUK, Mateusz, 32 050 SKAWINA (PL); CHOMA, Lukasz, 32 050 SKAWINA (PL); RYBA, Dariusz, 32 050 SKAWINA (PL)
(74) Representative: Bialkowski, Adam

(57) **Abstract**

A plate and spigot connection system (100) includes a first engagement element (12) and a second engagement element (22). The first engagement element (12) is provided along a periphery of a first aperture (14) formed on a plate (10). The second engagement element (22) configured along a periphery of a through hole (24) of a spigot (20) engages with the first engagement element (12) to configure an engagement assembly (30) enabling fluid communication between the spigot (20) and other side of the plate (10). The spigot (20) includes a collar (26) integrally formed and protruding from the spigot (20). The collar (26) is configured radially spaced from and around at least a portion of the second engagement element (22) and is forming an additional contact area (32) between the spigot (20) and the plate (10).

## Description

The present invention relates to a connection system, more particularly, the present invention relates to a plate and a spigot connection system for a vehicle heat exchanger.

A plurality of heat exchangers are used in a vehicle such as for example, a radiator used in engine cooling system, a condenser, an evaporator used in vehicle air conditioning system and a charge air cooler for cooling compressed air entering into the combustion chamber. The charge air cooler is generally cooled by water and is often referred to as a Water Charge Air cooler. In case of the water charged air cooler, the water flows through heat exchange passages configured within a housing and the housing receives air to be cooled that surrounds the heat exchange passages. The Water Charge Air cooler includes a pair of inlet and outlet spigots configured on the housing or a protruding portion of the housing for delivering and collecting water. The spigots are in fluid communication with the heat exchanger passages for ingress of the water into the heat exchanger passages and egress of the water from the heat exchanger passages respectively. The heat exchanger further includes a pair of pipes configured on the housing or the protruding portion of the housing for ingress and egress of air to be cooled with respect to an interior of the housing respectively.

The inlet and outlet spigots are either directly mounted on the housing. Otherwise, the inlet and outlet spigots are indirectly connected to the housing via respective protruding portions disposed in between the respective inlet and outlet spigots and the housing. In case the spigots are mounted on the protruding portion of the housing, the inlet spigot of the pair of spigots along with the protruding portion of the housing distributes the water to the heat exchange passages. Whereas, the outlet spigot of the pair of spigots along with corresponding protruding portion collects water after the water has extracted heat from the air surrounding the heat exchange passages, thereby causing cooling of the air. As the heat exchange passages are constricted passages, the water supplied to the water charge air cooler is often pressurized by a pump. Accordingly, the spigots, such as for example, the inlet spigot supplying water to the heat exchange passages is subjected to dynamic cyclic loads. The dynamic cyclic loads acting on the spigots cause bending tensions that in turn may cause failure or dislodging of the spigots from the housing. The bending tensions acting on the spigots may also damage a plate forming a part of either one of the housing or the protruding portion of the housing. As a secure, robust and leak-proof connection is required between the spigots and the plate forming a part of either one of the housing or the protruded portion configured on the housing and connecting the spigots to the housing. Generally, a brazing element, such as for example, a brazing ring is disposed between each of the spigots and the plate, thereafter, assembly of the spigots and the plate is subjected to high temperature in a brazing furnace, where the brazing ring fuses to form connection between the spigot and the plate.

The conventional plate-spigot connection fails to provide sufficient contact area between a spigot and a plate forming a part of either one of a housing or a protruding portion of the housing forming a Water Charge Air cooler. Few of the prior arts suggested using additional flange to provide strength to the plate-spigot connection by improving contact between the spigot and the plate. However, such conventional plate-spigot connection involves more number of components, particularly, an additional flange. The additional flange renders the conventional plate-spigot connection expensive and irrreliable. Further, the additional flange renders the assembly and manufacturing process for configuring joint between the plate and the spigot inconvenient as the assembly process requires additional alignment step for aligning the additional flange with the spigot and an aperture configured on the plate.

Accordingly, there is a need for a plate-spigot connection system that provides sufficient contact area between a spigot and a plate forming a part of either one of a housing or a protruding portion of the housing forming a Water Charge Air cooler. Further, there is a need for a plate-spigot connection system that forms a secure, robust and leak-proof connection between a spigot and a plate without requiring any additional component, thereby reducing the overall costs and manufacturing steps for configuring joint between the plate and the spigot.

An object of the present invention is to provide a plate-spigot connection system that obviates the drawbacks associated conventional plate-spigot connection systems that require additional components for configuring a connection.

Yet another object of the present invention is to provide a plate-spigot connection that configures a secure, robust, reliable and leak-proof connection between a spigot and a housing or a protruded portion of the housing forming the Water Charge Air cooler.

Yet another object of the present invention is to provide a plate-spigot connection that is simple and involves fewer process steps as compared to conventional plate-spigot connection.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

A plate and spigot connection system is disclosed in accordance with an embodiment of the present invention. The plate and spigot connection system includes a first engagement element and a second engagement element. The first engagement element is provided along a periphery of a first aperture formed on a plate. The second engagement element configured along a periphery of a through hole of a spigot engages with the first engagement element to configure an engagement assembly enabling fluid communication between the spigot and other side of the plate. The spigot includes a collar integrally formed and protruding from the spigot. The collar is configured radially spaced from and around at least a portion of the second engagement element and is forming an additional contact area between the spigot and the plate.

Generally, the first engagement element is a first neck formed along the periphery of the first aperture.

Further, the second engagement element is a second neck axially extending from the spigot and that receives the first neck or is received within the first neck.

Specifically, the first engagement element and the second engagement element configuring the engagement assembly are either one of complimentary snap fit engagement elements and complimentary threaded elements.

Generally, the plate and spigot connection system includes a fusible material disposed between the engagement assembly and the collar to form a fused connection between the spigot and the plate.

Typically, the fusible material is either one of a soldering paste and a brazing element in form of a closed loop, an open loop and a discontinuous profile arranged along the engagement assembly.

Generally, the plate and spigot connection system further includes an additional collar extends from the spigot and engages with lateral sides of a protruding portion formed on the plate to prevent angular movement of the spigot relative to the plate.

Particularly, the collar extends from diametrically opposite sides of the spigot. The additional collar extends from diametrically opposite sides of the spigot and includes lip portions that engage with the respective lateral sides of the protruding portion of the plate.

Generally, the collar is close the axis "A" of the spigot.

Alternatively, the collar is farther away from the axis "A" of the spigot.

A heat exchanger is disclosed in accordance with an embodiment of the present invention. The heat exchanger includes a housing, a pair of spigots and a pair of pipes, The housing receives a plurality of heat exchange passages through which a first fluid flows. The housing further receives a second fluid around the heat exchanger passages to facilitate heat exchange between the first fluid and the second fluid. The pair of spigots is configured on a plate forming at least a portion of the housing and is in fluid communication with the heat exchanger passages for ingress of the first fluid into the heat exchanger passages and egress of the first fluid from the heat exchanger passages respectively. The pair of pipes is configured on the housing for ingress and egress of the second fluid with respect to an interior of the housing respectively. The connection between the plate of the housing and at least one spigot of the pair of spigots is formed by the plate and spigot connection system as disclosed hereinabove.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
**FIG. 1a** illustrates an isometric view of a plate and spigot connection system in accordance with an embodiment of the present invention;
**FIG. 1b** illustrates a side view of the plate and spigot connection system of **FIG. 1a**;
**FIG. 1c** illustrates a top view of the plate and spigot connection system of **FIG. 1a**;
**FIG. 1d** illustrates an exploded view of the plate and spigot connection system of **FIG. 1a****;**
**FIG. 1e** illustrates a sectional view of the plate and spigot connection system along section B-B' depicted in **FIG. 1c**, also is depicted an enlarged view of an engagement assembly of the plate and spigot connection system of **FIG. 1a**;
**FIG. 2a** illustrates an isometric view of a plate and spigot connection system in accordance with another embodiment of the present invention;
**FIG. 2b** illustrates a side view of the plate and spigot connection system of **FIG. 2a**;
**FIG. 2c** illustrates a top view of the plate and spigot connection system of **FIG. 2a**;
**FIG. 2d** illustrates an exploded view of the plate and spigot connection system of **FIG. 2a**;
**FIG. 2e** illustrates a sectional view of the plate and spigot connection system along section C-C' depicted in **FIG. 2c**, also is depicted an enlarged view of an engagement assembly of the plate and spigot connection system of **FIG. 2a****;**
**FIG. 3a** illustrates an isometric view of a plate and spigot connection system in accordance with yet another embodiment of the present invention;
**FIG. 3b** illustrates a side view of the plate and spigot connection system of **FIG**. **3a**;
**FIG**. **3c** illustrates a top view of the plate and spigot connection system of **FIG**. **3a**;
**FIG**. **3d** illustrates an exploded view of the plate and spigot connection system of **FIG**. **3a**;
**FIG**. **3e** illustrates a sectional view of the plate and spigot connection system along section D-D' depicted in **FIG**. **3c**, also is depicted an enlarged view of an engagement assembly of the plate and spigot connection system of **FIG. 3a****;** and

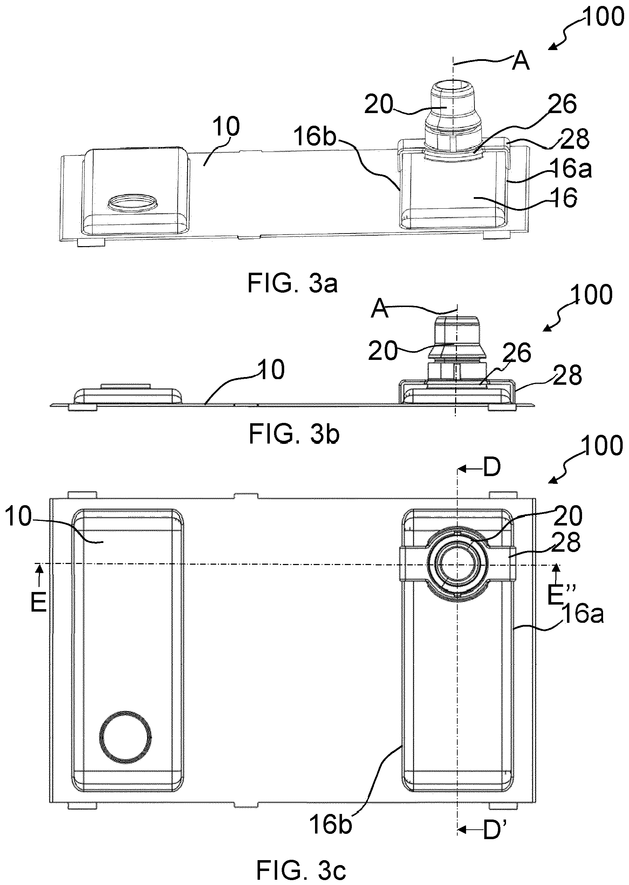

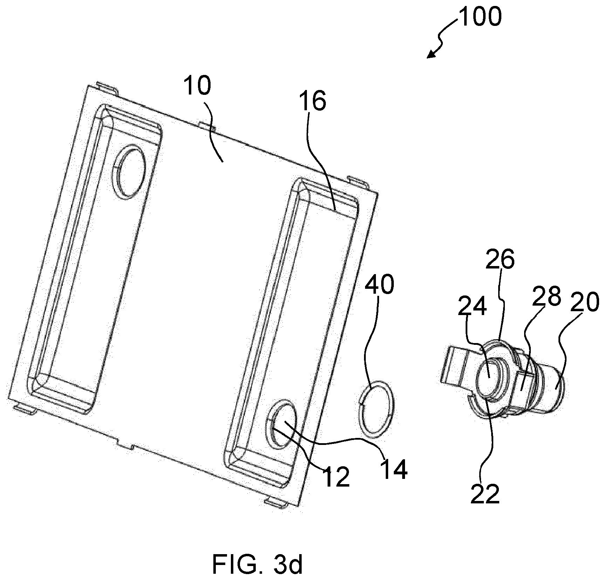

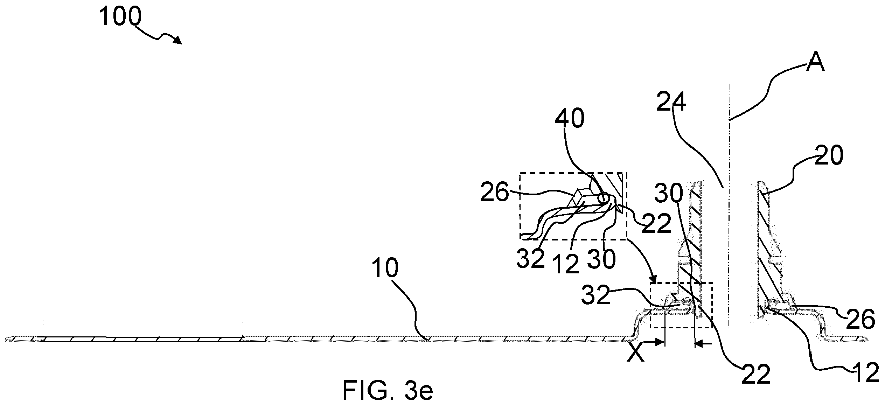

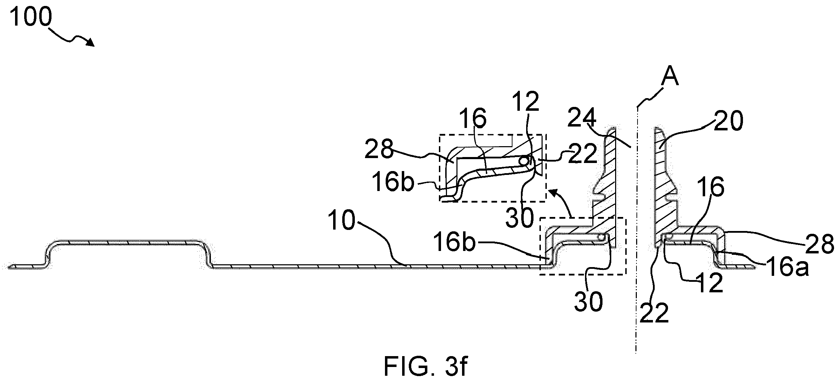

**FIG. 3f** illustrates a sectional view of the plate and spigot connection system along section E-E' depicted in **FIG**. **3c**, also is depicted an enlarged view of an engagement assembly of the plate and spigot connection system of **FIG**. **3a****.**

It must be noted that the figures disclose the invention in a detailed enough way to be implemented, said figures helping to better define the invention if needs be. The invention should however not be limited to the embodiment disclosed in the description.

The present invention envisages a plate and spigot connection system that includes a first engagement element provided along a periphery of a first aperture formed on a plate and a second engagement element configured along a periphery of a through hole of a spigot. The first and the second engagement elements configure an engagement assembly for enabling fluid communication between the spigot and other side of the plate. The spigot further includes a collar extending therefrom. The collar is configured radially spaced from and around at least a portion of the second engagement element forms an additional contact area between the spigot and the plate. Although, the plate and spigot connection system of the present invention is explained in the forthcoming description for configuring connection between the spigot and a plate forming a part of either one of a housing or a protruding portion of the housing of the water charge air cooler for use in a vehicle. However, the plate and spigot connection system is also applicable for any other applications, where it is required to configure a secure, robust, reliable and leak-proof connection between a spigot and a plate forming a part of a housing or a protruding portion of the housing of a heat exchanger that is not limited for use in vehicle applications. Particularly, the plate and spigot connection system finds use in applications where the spigot is subjected to stresses, bending moment, dislodging forces, dynamic and cyclic loads due to pressurized fluid supplied thereto but the connection between the spigot and the plate is required to be secure, robust and leak-proof and the connection between the spigot and the plate is required to be inexpensive, easy to implement and exhibiting improved durability. The plate and spigot connection system also finds application where a spigot is required to be connected to a plate forming a part of a housing or a protruded portion of the housing and any angular movement of the spigot with respect to the plate is required to be arrested.

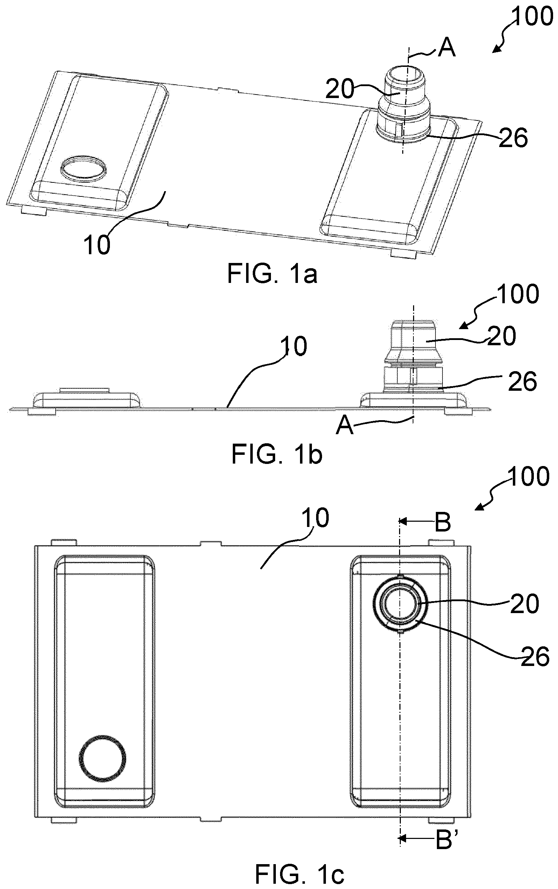

**FIG.1a** - **FIG. 1e** illustrate different views, particularly, an isometric view, a side view, a top view, an exploded view and a sectional view of plate and spigot connection system **100** in accordance with an embodiment of the present invention.

The plate and spigot connection system **100** includes a first engagement element **12**, a second engagement element **22** and a collar **26**. The first engagement element **12** is provided along a periphery of a first aperture **14** formed on a plate **10** and the second engagement element **22** is configured along a periphery of a through hole **24** of a spigot **20**. The first engagement element **12** and the second engagement element **22** are complimentary to each other. The first engagement element **12** and the second engagement element **22** configure an engagement assembly **30** for enabling mounting of the spigot **20** over the plate **10** and fluid communication between the spigot **20** and other side of the plate **10**, particularly, the side of the plate **10** opposite to the side on which the spigot **20** is mounted. The first engagement element

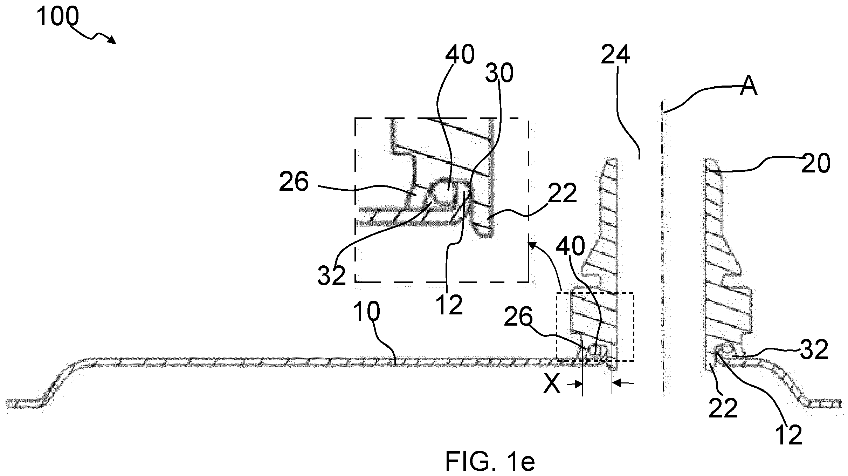

**12** is a first neck formed along the periphery of the first aperture **14**. Whereas, the second engagement element **22** is a second neck axially extending from the spigot **20**. The second engagement element **22** in the form of the second neck receives the first engagement element **12** in the form of the first neck. Alternatively, the second engagement element **22** in the form of the second neck is received within the first engagement element in the form of the first neck as illustrated in the **FIG. 1e**. The first engagement element **12** and the second engagement element **22** may still have different configurations. For example, the first engagement element **12** and the second engagement element **22** are either one of complimentary snap fit engagement elements and complimentary threaded elements. However, the present invention is not limited to any particular configuration of the first engagement element **12** and the second engagement element **22**, as far as the first engagement element **12** and the second engagement element 22 form engagement between the spigot **20** and the plate **10** and fluid communication between the spigot **20** and other side of the plate **10.**

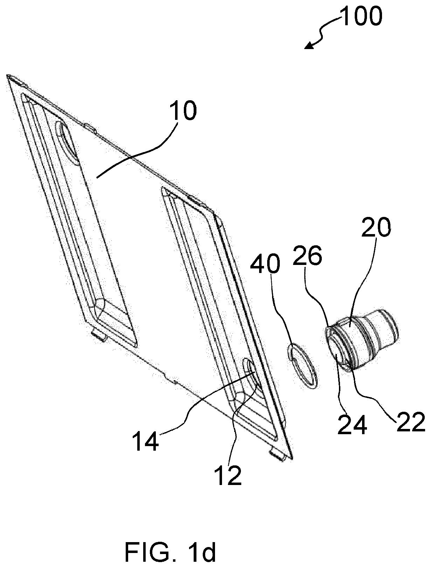

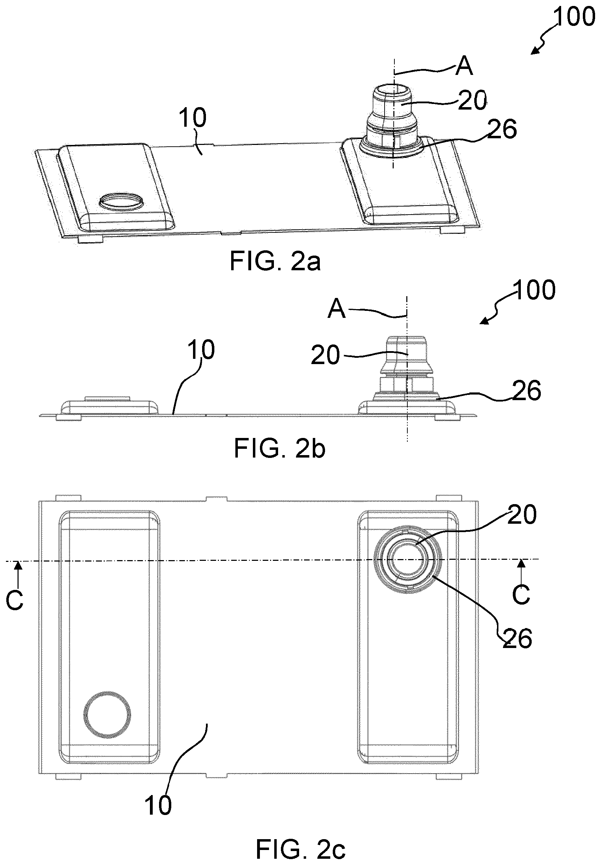

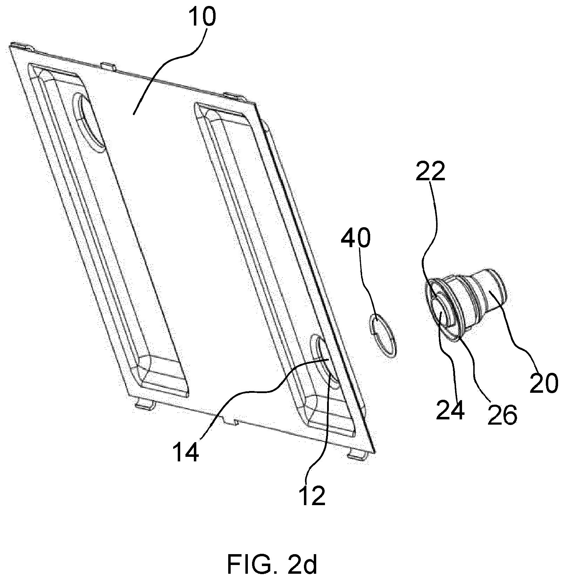

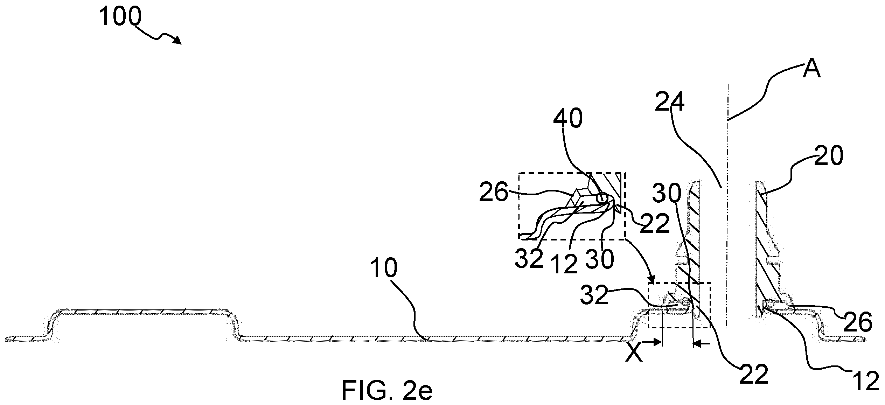

The spigot **20** further includes the collar **26** integrally formed and extending therefrom and along at least a portion of a periphery of the spigot **20**. Preferably, the collar **26** extends along the periphery of the spigot **20** as illustrated in **FIG. 1d**. The collar **26** is configured radially spaced from and around at least a portion of the second engagement element **22** or the first engagement element **12** and forms an additional contact area **32** between the spigot **20** and the plate **10**. Specifically, the collar **26** is formed around the engagement assembly **30**. The additional contact area **32** formed between the spigot **20** and the plate **10** increases as the distance "**X**" of the collar **26** from the engagement assembly **30** or the distance of the collar **26** from the axis "A" of the spigot **20** increases. In accordance with an embodiment of the present invention as illustrated in the **FIG. 1a** - **FIG**. **1e**, the collar **26** is close to the axis "A" of the spigot **20**. In accordance with another embodiment of the present invention as illustrated in the **FIG. 2a** - **FIG. 2e****,** the collar **26** is comparatively farther away from the axis "A" of the spigot **20** as compared to the embodiment of the plate and spigot connection system **100** depicted the **FIG. 1a** - **FIG. 1e****.**

The plate and spigot connection system **100** further includes fusible material such as for example, a brazing element **40** or a soldering paste that is disposed between the engagement assembly **30** and the collar **26.** In case the brazing element **40** is used as the fusible material, the brazing element **40** is either in form of a closed loop, an open loop or a discontinuous profile arranged along the engagement assembly **30**. In case the soldering paste is used as the fusible material, the soldering paste is disposed along the engagement assembly **30**. The brazing element **40** or the soldering paste is having a melting point lower than that of material of the spigot and the plate **10**. Accordingly, the brazing element **40** or the soldering paste is fused and the molten material of the brazing element **40** or the soldering paste is filled in the additional contact area **32** to form secure connection between the spigot **20** and the plate **10** when the spigot-plate assembly is subjected to a high temperature, particularly, to melting point of the brazing element **40** in a brazing furnace or melting point of the soldering paste. However, the present invention is not limited to any particular configuration, number and placement of the brazing element **40** or any particular composition of the soldering paste disposed with respect to the engagement assembly **30** as far as the brazing element **40** or the soldering paste is capable of configuring respective brazing joint and soldering joint between the spigot **20** and the plate **10**. The additional contact area **32** provided by the collar **26** improved surface contact between the fused material, particularly, the fused brazing element **40** and the engagement assembly **30** at one side and the fused brazing element **40** and at least a portion of the collar **26** on the other side, in case the fused material is brazing element **40**, thereby configuring secure, robust and leak-proof connection between the spigot **20** and the plate **10**. Further, with such configuration of the collar **26** with respect to the engagement assembly **30** and additional contact area **32** formed thereby, additional brazing material or soldering paste can be disposed between the engagement assembly **30** and the collar **26** to configure secure connection between the spigot **20** and the plate **10.** In accordance with another embodiment, the brazing or soldering joint/connection between the spigot **20** and the plate **10** can also be formed by other means, such as for example, forming an additional layer of cladding material on the first engagement element **12** and the collar **26** of the plate **10** and the spigot **20** respectively. The additional contact area **32** provided by the collar **26** improved surface contact between connecting elements forming the connection system 100, thereby enabling the plate and spigot connection system 100 to withstand high bending moment and twisting moment.

In accordance with another embodiment of the present invention as illustrated in the **FIG. 2a** - **FIG. 2e****,** the collar of the plate and spigot connection system of the embodiment illustrated in **FIG. 2a** - **FIG. 2e** is comparatively farther away from the axis "A" of the spigot as compared to the collar of the plate and spigot connection system of the embodiment depicted in **FIG**. **1a** - **FIG**. **1e**. **FIG. 2a** - **FIG. 2e** illustrate different views, particularly, an isometric view, a side view, a top view, an exploded view and a sectional view of plate and spigot connection system **100** in accordance with an embodiment of the present invention. Such configuration of the collar **26** being farther away from the axis "A" of the spigot, **20** provides additional contact area 32 to accommodate additional brazing material or soldering paste between the engagement assembly **30** and the collar **26**, thereby enabling the plate and spigot connection system **100** to withstand high bending moment and twisting moment. With such configuration of the collar **26** being farther away from the axis "A" of the spigot **20**, further improved surface contact between fused material such as for example, fused brazing element **40** and the engagement assembly **30** at one side and the fused brazing element **40** and at least a portion of the collar **26** on the other side is achieved, thereby configuring secure, robust and leak-proof connection between the spigot **20** and the plate **10**.

In accordance with yet another embodiment of the present invention as illustrated in the **FIG. 3a** - **FIG. 3f****,** the plate and spigot connection system **100** includes the collar **26** and an additional collar **28**. The collar of the plate and spigot connection system depicted in **FIG. 3a** - **FIG. 3f** is also similar to the collar of the plate and spigot connection system depicted in **FIG. 2a** - **Fig. 2b****.** More specifically, the collar of the plate and spigot connection system depicted in **FIG. 3a** - **FIG. 3f** is also comparatively farther away from the axis "A" of the spigot as compared to the collar of the plate and spigot connection system of the embodiment depicted in **FIG. 1a** - **FIG. 1e**. Such configuration of the collar **26** being farther away from the axis "A" of the spigot, **20** provides additional contact area **32** to accommodate additional brazing material or soldering paste between the engagement assembly **30** and the collar **26**, thereby enhancing the strength of the connection and enabling the plate and spigot connection system **100** to withstand high bending moment and twisting moment. However, the present invention is not limited to any particular configuration of the collar **26**, as far as the collar **26** provides additional contact area **32** to accommodate additional brazing material or soldering paste between the engagement assembly **30** and the collar **26**, thereby improving the connection and enabling the plate and spigot connection system **100** to withstand high bending moment and twisting moment.

The additional collar **28** is configured radially spaced from and around at least a portion of the collar **26**. More specifically, the additional collar **28** extends from diametrically opposite sides of the spigot **20**. In one embodiment, the additional collar **26** orthogonally extends with respect to an axis "A" of the spigot **20** and includes lip portions that engage with respective lateral sides **16a** and **16b** of a protruding portion **16** of the plate **10**. In an alternative embodiment, the additional collar **26** angularly extends with respect to an axis "A" of the spigot **20** and includes lip portions that engage with respective lateral sides **16a** and **16b** of a protruding portion **16** of the plate **10**. Further, the additional collar **28** extends to and engages with the lateral sides **16a** and **16b** of the protruding portion **16** formed on the plate **10** to prevent angular movement of the spigot **20** relative to the plate **10**. Such a configuration of the additional collar **28**, prevents rotational movement of the spigot **20** with respect to the plate **10**, particularly, with respect to the protruding portion **16** formed on the plate **10**. However, the present invention is not limited to any particular configuration of the additional collar **28**, as far as the portions thereof, particularly lip portions thereof engage with the respective lateral sides **16a** and **16b** of the protruding portion **16** of the plate **10** to arrest angular movement of the spigot **20** relative to the plate **10** or the protruding portion **16** formed on the plate **10**.

Also is disclosed a heat exchanger **200** in accordance with an embodiment of the present invention. The heat exchanger **200** includes a housing **110**, a pair of spigots **20** and a pair of pipes **21**. The housing **110** receives a plurality of heat exchange passages through which a first fluid flows. The housing **110** further receives a second fluid around the heat exchanger passages to facilitate heat exchange between the first fluid and the second fluid. The pair of spigots **20** is configured on a plate **10** forming at least a portion of the housing **110** and in fluid communication with the heat exchanger passages for ingress of the first fluid into the heat exchanger passages and egress of the first fluid from the heat exchanger passages respectively. The pair of pipes **21** is configured on the housing **110** for ingress and egress of the second fluid with respect to an interior of the housing **110** respectively. The connection between the plate **10** of the housing **110** and at least one spigot of the pair of spigots **20** is formed by the plate and spigot connection system **100** as disclosed above.

Several modifications and improvement might be applied by the person skilled in the art to a plate and spigot connection system, particularly condenser as defined above and such modifications and improvements will still be considered within the scope and ambit of the present invention, as long the plate and spigot connection system include a first engagement element and a second engagement element. The first engagement element is provided along a periphery of a first aperture formed on a plate. The second engagement element configured along a periphery of a through hole of a spigot engages with the first engagement element to configure an engagement assembly enabling fluid communication between the spigot and other side of the plate. The spigot includes a collar integrally formed and protruding from the spigot. The collar is configured radially spaced from and around at least a portion of the second engagement element and is forming an additional contact area between the spigot and the plate.

In any case, the invention cannot and should not be limited to the embodiments specifically described in this document, as other embodiments might exist. The invention shall spread to any equivalent means and any technically operating combination of means.

## Claims

1. A plate and spigot connection system (100) comprising:
• a first engagement element (12) provided along a periphery of a first aperture (14) formed on a plate (10);
• a second engagement element (22) configured along a periphery of a through hole (24) of a spigot (20) adapted to engage with the first engagement element (12) to configure an engagement assembly (30) enabling fluid communication between the spigot (20) and other side of the plate (10),
**characterized in that** the spigot (20) comprises a collar (26) integrally formed and protruding from the spigot (20), the collar (26) is configured radially spaced from and around at least a portion of the second engagement element (22) and is forming an additional contact area (32) between the spigot (20) and the plate (10).

2. The plate and spigot connection system (100) as claimed in the previous claim, wherein the first engagement element (12) is a first neck formed along the periphery of the first aperture (14).

3. The plate and spigot connection system (100) as claimed in claim 2, wherein the second engagement element (22) is a second neck axially extending from the spigot (20) and is adapted to either receive the first neck or be received within the first neck.

4. The plate and spigot connection system (100) as claimed in any of the preceding claims, wherein the first engagement element (12) and the second engagement element (22) configuring the engagement assembly (30) are either one of complimentary snap fit engagement elements and complimentary threaded elements.

5. The plate and spigot connection system (100) as claimed in any of the preceding claims, wherein a fusible material is disposed between the engagement assembly (30) and the collar (26) to form fused connection between the spigot and the plate.

6. The plate and spigot connection system (100) as claimed in the previous claim, wherein the fusible material is either one of a soldering paste and a brazing element (40) in form of a closed loop, an open loop and a discontinuous profile arranged along the engagement assembly (30).

7. The plate and spigot connection system (100) as claimed in any of the preceding claims, further comprising an additional collar (28) that extends from the spigot (20) and engages with lateral sides (16a) and (16b) of a protruding portion (16) formed on the plate (10) to prevent angular movement of the spigot (20) relative to the plate (10).

8. The plate and spigot connection system (100) as claimed in the previous claim, wherein the additional collar (28) extends from diametrically opposite sides of the spigot (20), the additional collar (28) is comprises lip portions that engage with the respective lateral sides (16a) and (16b) of the protruding portion (16) of the plate (10).

9. The plate and spigot connection system (100) as claimed in any of the preceding claims, wherein the collar (26) is close the axis "A" of the spigot (20).

10. The plate and spigot connection system (100) as claimed in any of the preceding claims, wherein the collar (26) is farther away from the axis "A" of the spigot (20).

11. A heat exchanger (200) comprising:
• a housing (110) adapted to receive a plurality of heat exchange passages through which a first fluid flows, the housing (110) further adapted to receive a second fluid around the heat exchanger passages to facilitate heat exchange between the first fluid and the second fluid;
• a pair of spigots (20) configured on a plate (10) forming at least a portion of the housing (110) and in fluid communication with the heat exchanger passages for ingress of the first fluid into the heat exchanger passages and egress of the first fluid from the heat exchanger passages respectively; and
• a pair of pipes (21) configured on the housing (110) for ingress and egress of the second fluid with respect to an interior of the housing (110) respectively;
**characterized in that** the connection between the plate (10) of the housing (110) and at least one spigot of the pair of spigots (20) is formed by the plate and spigot connection system (100) of any of the preceding claims.
